Europäisches Patentamt

European Patent Office

Office européen des brevets

(11) Publication number: **0 361 820**
**A2**

## (12) EUROPEAN PATENT APPLICATION

(21) Application number: **89309709.7**

(22) Date of filing: **25.09.89**

(30) Priority: **26.09.88 JP 241297/88**

(43) Date of publication of application:
**04.04.90 Bulletin 90/14**

(84) Designated Contracting States:
**DE GB**

(51) Int. Cl.⁵: **G06F 15/20**

(71) Applicant: **SHARP KABUSHIKI KAISHA**
**22-22 Nagaike-cho Abeno-ku**
**Osaka(JP)**

(72) Inventor: **Kanza, Hiroyuki**
**1-2-3-204, Kabutodai Kizu-cho**
**Soraku-gun Kyoto(JP)**
Inventor: **Kuga, Shigeki**
**2-15-15, Nishichiyogaoka**
**Nara-shi Nara-ken(JP)**
Inventor: **Morishita, Taro**
**4-13-1, Nagamodai Kamo-cho**
**Soraku-gun Kyoto(JP)**
Inventor: **Wada, Masahiro**
**1-10-31, Shijooji**
**Nara-shi Nara-ken(JP)**
Inventor: **Onishi, Satoshi**
**Tama dormitory 2-29-3, Utsukushigaoka**
**Midori-ku**
**Yokohama-shi Kanagawa-ken(JP)**

(74) Representative: **Hitchcock, Esmond Antony et al**
**Lloyd Wise, Tregear & Co. Norman House**
**105-109 Strand**
**London WC2R 0AE(GB)**

(54) Text processing apparatus with support function for text preparation.

㊿ A text processing apparatus having a text preparation support function is provided with an input device for inputting a text; a storage for storing the input text; a display device for displaying said input text; and an editing device for editing said input text; and is characterized in that management is carried out with respect to each sentence including the table of contents, headings, figure numbering, and the like that is being edited, by storing the sentence location, reference points to other sentences, information for such reference, and whereby that the content of said text is automatically corrected of which such correction has become necessary as a result of a change in the text effected by the user.

## TEXT PROCESSING APPARATUS WITH SUPPORT FUNCTION FOR TEXT PREPARATION

The present invention relates to a text processing apparatus for synthetically supporting preparation, editing, and utilization of a text. The apparatus of this invention may be used in those which are used in the field where the processing of textural data is required such as a word processor or a data processing machine having text processing function.

Text processing apparatus inclusive word processors which have such functions as input/output, editing, character conversion are now practically used. In case where a text containing a logical construction is edited by using conventional text processing apparatus the text will be processed by regarding it as an one-dimensional character string, without taking its logical structure into consideration.

On the contrary, an outline processor (its analogues apparatus such as an idea processor) represents the text processing apparatus which may support the editing of a text containing logical construction. The outline processor is provided with functions both of hierarchically preparing compositional framework of a text (referred to as table of contents editing function), and of editing a text by taking its individual sentences as elements (referred to as sentence editing function).

Regarding the text editing function, the word processors that have become popular especially in the recent years are further provided with the function for correcting and altering character string, while the outline processors are also provided with the function for correcting and altering with respect to an element unit. But we have been unable to find a text processing apparatus which may support the preparation of text composition by automatically altering even the textual content of individual items in response to the correction and change operations so that the editing result does not contradict the logical construction of the text.

Japanese Patent Laid-Open No. SHO 63(1988)-8970, "TEXT EDITING SUPPORT DEVICE", discloses a device for supporting the text preparation such as of insurance contracts or statistical data which requires a huge amount of data. The object of this device is, however, to simplify the correction of variable data and the like operations, and does not cover the processing for automatically renumbering the headings, paragraphs, and/or items in a text.

In case of, for, example, erasing or moving the content of a text by the unit of chapter, paragraph, or item, together with the table of contents by means of the table of contents editing function of a conventional outline processor, the relative positions may be corrected, but the changes in the textual content accompanying such move (renumbering of chapter, paragraph, and item number of the headings, renumbering of chapter, paragraph and item number that are referred in the sentences) must be manually corrected by the user while checking the whole text. Since such correction work requires not only human attention and patience but also a large amount of time to be spent, it can be a weighty problem with respect to the text editing efficiency. Similar problems occur also in the case of changing the figure and table numbers, or of changing items (for example dates and reference literatures) in a sentence that are related to the content of other sentences. A lot of problems related to the textual correction occur with these changes during the text preparation and editorial processing, and they can become serious problems especially when editing a text, such as a manual, with a large logical construction. Currently, no text processing apparatus automatically carries out the correcting of textual content as described above.

This invention provides text processing apparatus with a text preparation supporting function which has input means for inputting a text that may be composed of a plurality of sentences; text storage means for storing the text input from the input means; display means for displaying the text input from the input means; and editing means for editing the text input from the input means;

code replacing means for replacing, by sentences, the upper/lower relation among the sentences with codes accordingly to the characters in the sentences such as table of contents, headings, figure, number;

code storage means for storing respectively to each sentence the code replaced by the code replacing means;

second input means for inputting a change instruction to change the upper/lower relation among the sentences;

rewriting means for rewriting codes of the sentence instructed by the second input means and codes having the upper/lower relation with the above codes; and

correction means for correcting, the characters in the sentences such as table of contents, headings, or figure numbering from a head sentence in accordance with the codes rewritten by the rewriting means.

In this invention, the term of sentence includes a heading.

A keyboard is preferably used for the input means and the second input means, but a pointing device such as a tablet input device or a mouse may be also used.

The text storage means may be composed of an internal storage which is usually incorporated into a text processing apparatus, though it may be also composed of such external storage as hard disks and/or floppy disks.

The display means may be composed of a dot matrix type display device such as CRT, LCD, and EL display.

The text processing apparatus of this invention may be typically a word processor or a computer provided with character processing function, and the language to be processed may be either an European language or other languages. the code storage means may be composed of registers that may changeably store codes, while each code is a pointer group that represents the upper/lower relation among sentences.

The editing means, the code replacing means, the rewriting means, and the correction means may all be composed of CPU respectively as the editing processing unit, the code change processing unit, the rewriting processing unit, and the correction processing unit.

According to this invention, when a change instruction is input through the second input means by an operator, the content of a text being displayed on the display means is changed by the editing means, whereby rewriting the code in the code storage means that stores the upper/lower relation among the sentences in the text, automatically correcting the characters for the table of contents, headings, and figure numbering of the text accordingly to the new upper/lower relation represented by the rewritten code, so that a corrected text may be displayed on the display means.

In accordance with this invention, therefore, if a logical construction is changed when editing a logically constructed text, a change operation for automatically sorting the logic will be carried out so that the editing result will not contradict the logical structure of the text. Consequently, it is not required for the user to check the individual sentences and to correct the content of the entire text, making possible the prevention of correction mistakes. An effective support may be thus provided for text preparation, when the user is to prepare a text with a huge construction.

An embodiment of the invention will now be described by way of example and with reference to the drawings, in which:

Fig.1 is a bloc diagram indicating the composition of a text processing apparatus embodying this invention;

Fig.2 is a representation of the content of the working memory and sentence management register indicated in Fig.1;

Figs.3(a) ~ 3(c) are flowcharts to indicate the operation of an enbodiment of this invention; and

Figs.4 ~ 6 are the representations to explain the processing of text preparation support function of the embodiment.

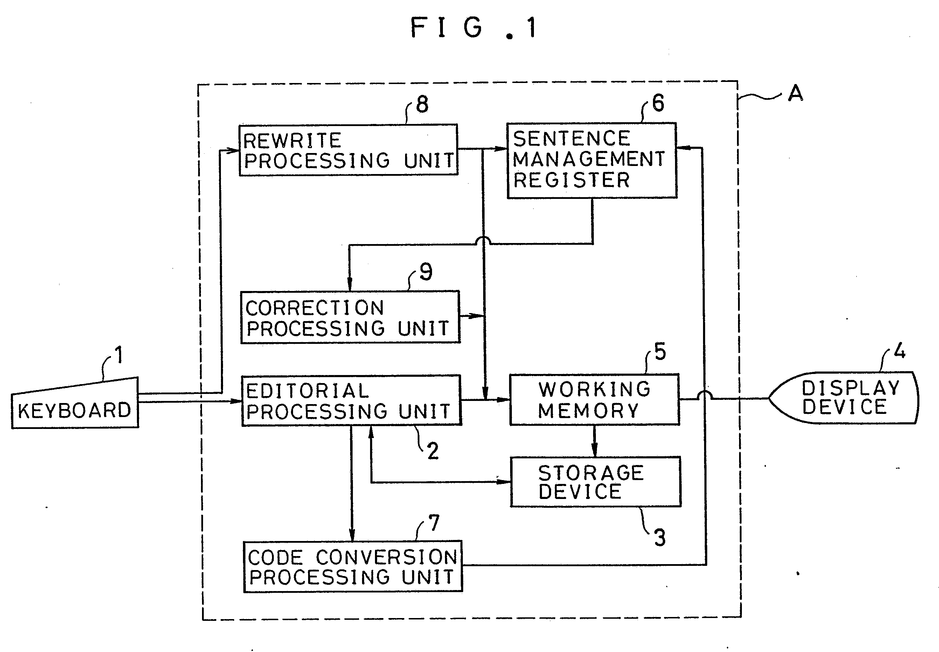

Referring to Fig.1, a keyboard 1 is used for inputting a text consisting of a plurality of sentences, for inputting read instruction to read out a desired text from the storage (later described), and for inputting change instruction for changing the upper/lower relation among the sentences. An editorial processing unit 2 is for editing the text input from the keyboard 1, and for editing the text read out from the storage accordingly to the read instruction that may be input through the keyboard 1. A storage 3 stores the text input from the keyboard 1. The storage 3 may be for example a external storage that stores a already prepared text. A display device 4 displays various informations including the text input from the keyboard 1. A working memory 5 temporarily stores the text being edited, and also temporarily stores the text read out from the storage 3. A sentence management register 6 stores the sentence management elements (later described) taken as the codes replaced for each sentence in the text. A code conversion processing unit 7 replaces sentence by sentence the upper/lower relation among the sentences with codes based on the characters of the table of contents, headings, and figure numbering and the like of the sentences.

A rewrite processing unit 8 changes the upper/lower relation of the sentences by receiving the change instruction input from the keyboard 1, and rewrite in accordance with the change instruction the code corresponding to the changed sentence and the codes having upper/lower relation with that code.

A correction processing unit 9 correct the characters of the table of the contents, headings, and figure numbering of each sentence starting from the head sentence of the text according to the upper/lower relation indicated by the codes that have been rewritten by the rewrite processing unit 8.

Incidentally, a symbol A indicates the main body of the text processing apparatus.

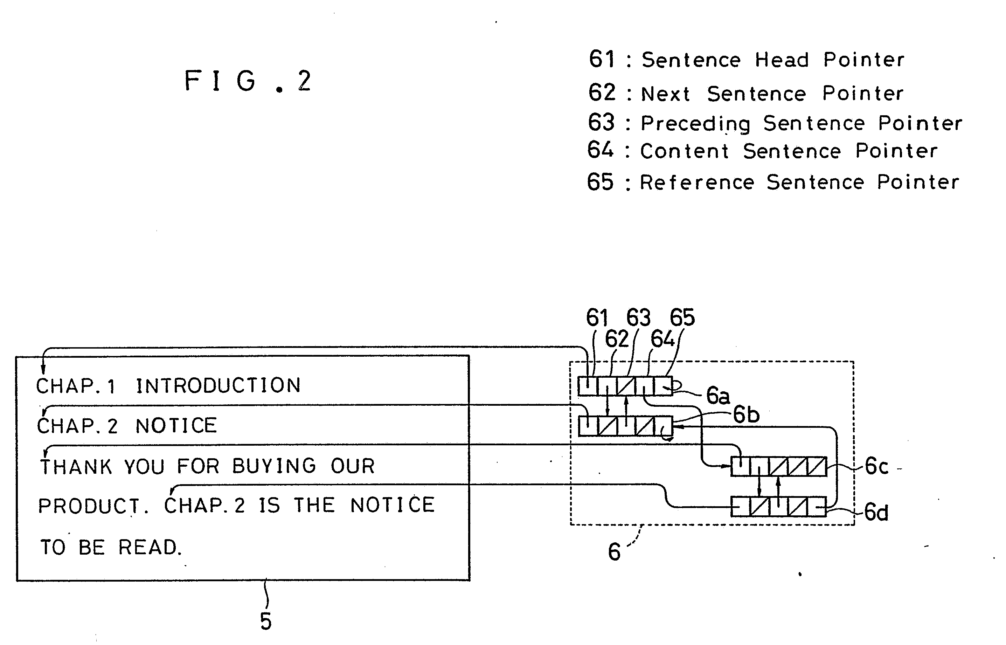

Fig.2 is an illustration for explaining the text editing function of this embodiment. Usually, a part of the content of the working memory 5 is displayed on the display device 4. If the content of the working memory 5 is changed because of such operation as insertion or delete of character, the display content of the display device 4 will reflect such change.

In the sentence management register 6, the sentence management elements 6a, 6b, 6c, and 6d that uniquely correspond to the sentences in the text being edited are stored. These sentence management elements are respectively composed of the following five elements:

(1) pointer 61 to indicate the head of the corresponding sentence in the working memory 5 (hereinafter referred to as sentence head pointer);

(2) pointer 62 to indicate the sentence management element corresponding to the next sentence (hereinafter: the next sentence pointer);

(3) pointer 63 to indicate the sentence management element corresponding to the preceding sentence (hereinafter: the preceding sentence pointer);

(4) pointer 64 to indicate the sentence management element corresponding to the head sentence of the textual content (hereinafter: the content sentence pointer); and

(5) pointer 65 to indicate the sentence management element corresponding to referred sentences (including headings, table of contents, and page number) (hereinafter: reference sentence pointer).

As it can be seen from Fig.2, the sentence management elements, 6a ~ 6d, make up a bidirectional list where the next sentence pointer 62 and the preceding sentence pointer 63 are coupled to each other. Since the content sentence pointer 64 is related to a table of contents item which is edited by the table of contents editing function and is not used in the sentences edited by the text editing function, the pointers 64 of the sentence management elements 6c and 6d that correspond to the sentences which are not the table of contents items become "nil" (indicated by slash marks in the figure). Also, the preceding sentence pointers 63 of the sentence management elements 6a and 6c that correspond to the head sentences of the table of the contents item sentences on the working memory 5 and the the next sentence pointers 62 of the the sentence management elements 6b and 6d each of which corresponds to the last sentence of a text are all made to be nil, because they do not have their pointing object. Further, the reference sentence pointer 65 in 6c which is the sentence management element of a sentence that does not contain a heading number to be referred becomes nil, because it does not have its pointing object.

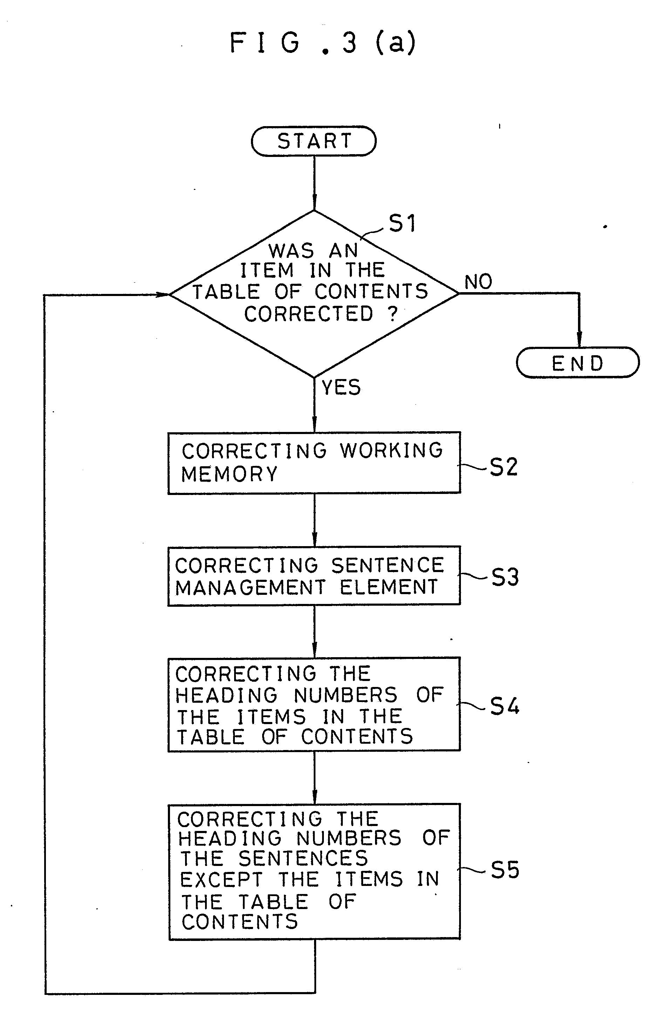

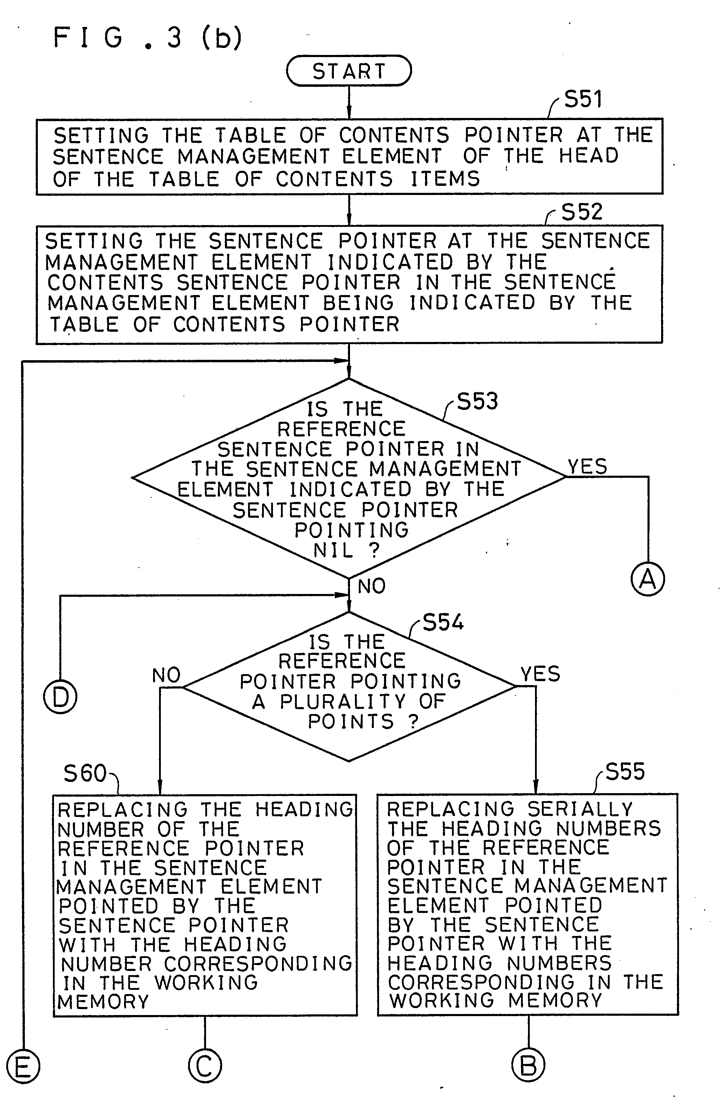

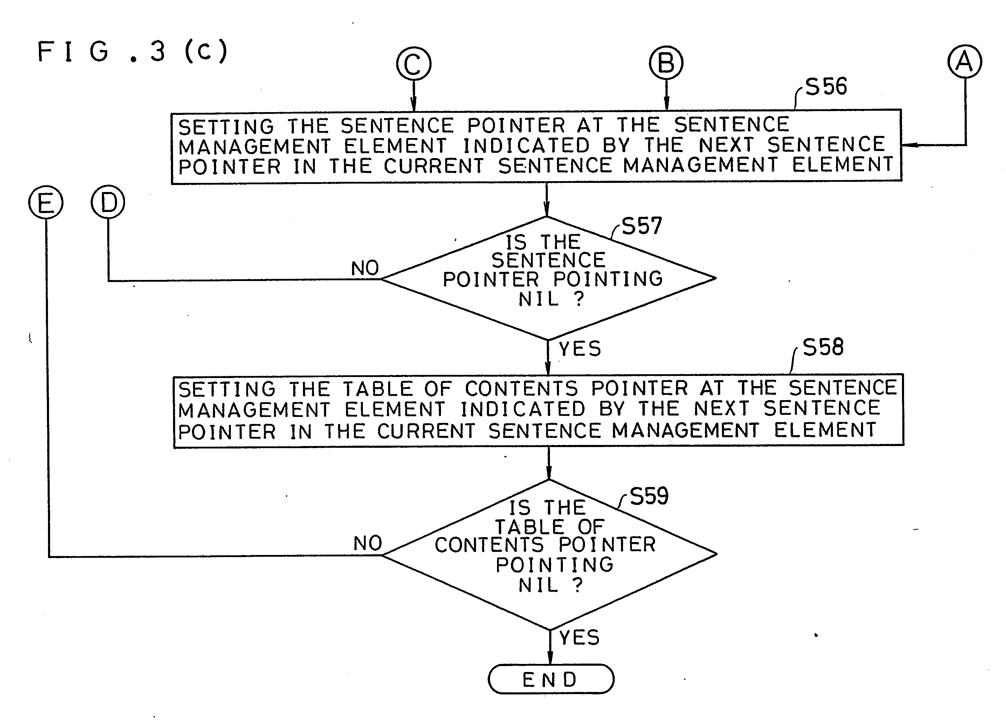

An example embodying the text editing support function, "table of contents correction", will be next described by using the flowcharts in Fig.3. Fig.3(a) is a general flowchart of the table of contents correction processing. If, in this flowchart, an operation for correcting the table of contents is carried out through the keyboard 1 (step S1), moving, delete and/or the like will be carried out with respect to the working memory 5 in response to said correctional operation just as will be with the editing routine of a conventional outline processor (step S2). The next sentence pointer 62 and the preceding sentence pointer 63 in the sentence management register 6 are also changed in the next step (step S3). After changing the pointers, the correction of the heading number is carried out. Starting from the sentence management element that corresponds to the head sentence in the table of contents items, the following operations will be carried out until the pointer indicating the sentence management element corresponding to the next sentence becomes nil (step S4):

(1) acquiring a heading number from the heading number in the preceding sentence;

(2) Replacing the heading number of the corresponding sentence in the working memory 5 with the acquired heading number; and

(3) Advancing to the sentence management element of the next sentence.

Finally, the following operations will be carried out with respect to the sentence management elements of all the sentences except the table of contents items (step S5):

(1) if the sentence management element corresponding to the referred sentence is nil, nothing is done; and

(2) if not nil, the heading number of the corresponding sentence in the working memory 5 is replaced by the heading number of the sentence management element pointed by its sentence management element.

Figs.3(b) and 3(c) are detail flowcharts for describing in detail the processing of step S5 in Fig.3(a).

First in this figure, the table of contents pointer is set at the sentence management element 6a which is the head of the table of contents items (step S51). The sentence pointer is next set at the sentence management element 6c indicated by the content sentence pointer 64 in the sentence management element 6a being pointed out by the table of contents pointer (step S52). Following the setting of the table of contents pointer and the sentence pointer, it is decided whether or not the reference sentence pointer 65 is pointing nil in the sentence management element indicated by the sentence pointer (step S53). If the result of the decision is NO, it is further decided whether or not the reference sentence pointer 65 points out a plurality of locations (step S54). If the result of this decision is YES, the heading numbers of the reference sentence pointer 65 in the sentence management elements indicated by the sentence pointer are serially replaced by the heading numbers of the corresponding sentences in the working memory 5 (step S55). And, the sentence pointer is set to the sentence management element indicated by the next sentence pointer 62 in the current sentence management element (step S56). It is decided at this point whether or not the sentence pointer is pointing nil (step 57), and, if the result of the decision is YES, the table of contents pointer is set to the sentence management element indicated by the next sentence pointer 62 in the current sentence management element (step S58). If, at this point, the table of contents pointer is pointing nil (step S59), the table of contents correction is concluded.

Incidentally, if the decision at the step 54 is NO, the heading number of the reference sentence pointer 65 in the sentence management data being indicated by the sentence pointer is replaced by the heading number of the corresponding sentence in the working memory 5 (step S60), and the operation advances to S56.

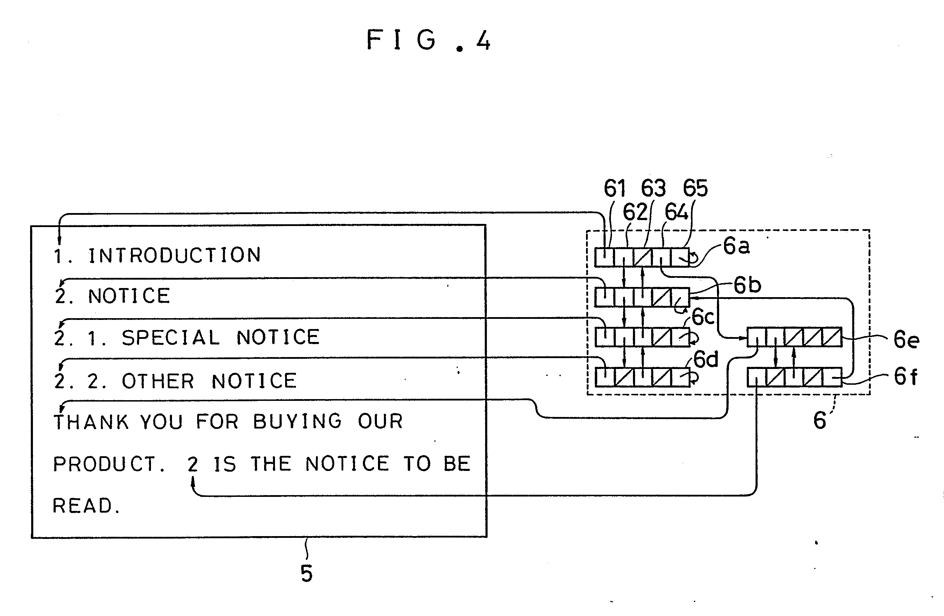

As a concrete example of the table of contents correction process that has been discussed above, a correction operation will now be described in which the positions of "1. Introduction" and "2. Notice" of the content shown in Fig.4 will be replaced by each other. In Fig.4, as its textual content, the table of contents item, "1. Introduction", has two sentences, "Thank ..." and "Please...", and other table of contents items do not have their content sentences.

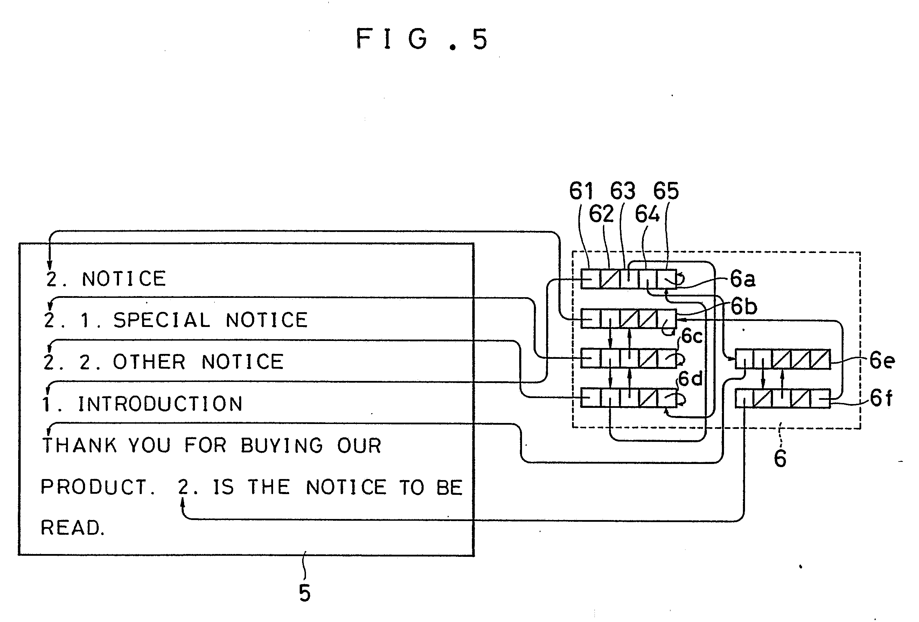

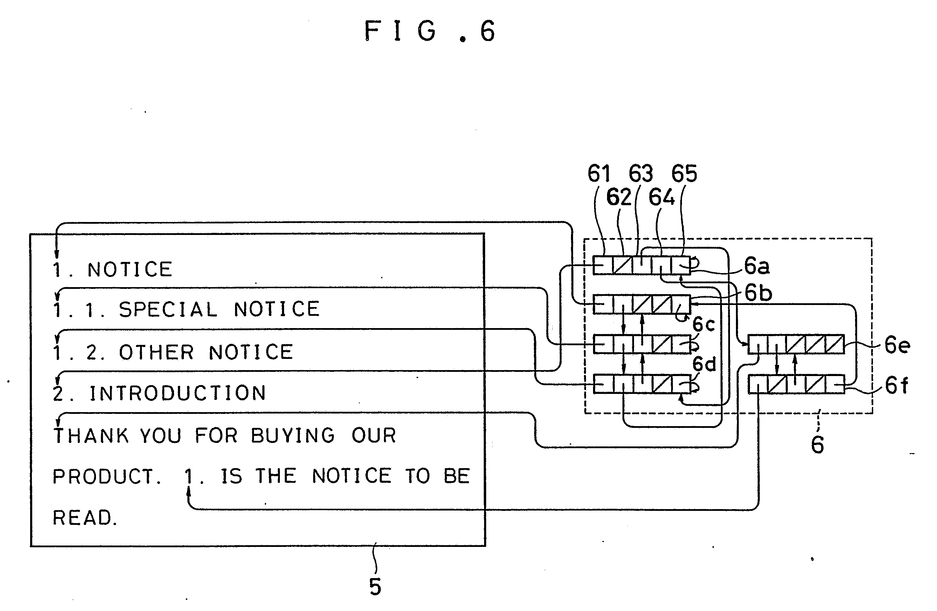

Firstly, the content of the working memory 5 is changed as it may be in the ordinary text processing apparatus. The next sentence pointer 62 and the preceding sentence pointer 63 are altered in the next step (Fig.5). Subsequently, the correction of the heading numbers of the table of contents items are to be carried out. Such correction starts from the sentence management element 6b which corresponds "2. Notice". Firstly, since this sentence management element is the head element, its heading number becomes "1." and the content of the working memory 5 is accordingly corrected. Next with respect to "2.1 Special Notice", the heading number of this sentence may be obtained from the heading number of the preceding sentence as "1.1", and the content of the working memory 5 is is accordingly corrected. Further next with respect to "2.2 Other Notice", the heading number of this sentence may be obtained from the heading number of the preceding sentence as "1.2", and the content of the working memory 5 is accordingly corrected. Finally, "1. Introduction" is corrected as "2. Introduction", and the step S4 is concluded. In the step S5, the heading numbers of the sentences except the table of contents items are to be corrected. The referred heading number of the sentence, "2. is the notice to be read.", of which the sentence management element corresponding to the sentence to be referred is not nil is changed to "1" (Fig.6). The correction for replacing the table of content items is now concluded, and the result of the correction will be displayed on the display device 4.

Although only one embodiment of the invention has been disclosed and described, it is apparent that other embodiments and modification of the invention may be appropriately used in a text processing apparatus that uses any language consisting of characters.

**Claims**

1. In a text processing apparatus with a support function for text preparation having input means for inputting a text that may be composed of a plurality of sentences; text storage means for storing the text input from the input means; display means for displaying the text input from the input means; and editing means for editing the text input from the input means; the apparatus comprising:
code replacing means for replacing, by sentences, the upper/lower relation among the sentences with codes according to the characters in the sentences such as table of contents, headings, figure numbering;
code storage means for storing respectively to each sentence the code replaced by the code replacing means;
second input means for inputting a change instruction to change the upper/lower relation among the sentences;
rewriting means for rewriting codes of the sentence instructed by the second input means and codes having the upper/lower relation with the above codes; and
correction means for correcting the characters in sentences such as table of contents, headings, or figure numbering from a head sentence in accordance with codes rewritten by the rewriting means.

2. A text processing apparatus of claim 1 wherein said code storage means comprises registers in which the codes may be stored in a manner capable of being rewritten.

3. A text processing apparatus of claim 1 wherein each of said codes comprises a pointer group composed of a pointer for pointing the head of a sentence in the text; a pointer for pointing the next sentence; a pointer for pointing the preceding sentence, a pointer for pointing the head sentence of the textual content; and a pointer for pointing the sentence to be referred.

4. A text processing apparatus of claim 1 wherein said text storage means comprises an internal storage incorporated into the text processing apparatus.

5. A text processing apparatus of claim 1 wherein said text storage means include an external storage into which a text is already input.

6. A text processing apparatus of claim 5 wherein said external storage comprises hard disks and floppy-disks.

7. A text processing apparatus of claim 5 wherein said editing means may edit a selected text read out from said external storage means.

# F I G . 1

EP 0 361 820 A2

# F I G . 2

61 : Sentence Head Pointer
62 : Next Sentence Pointer
63 : Preceding Sentence Pointer
64 : Content Sentence Pointer
65 : Reference Sentence Pointer

CHAP.1 INTRODUCTION

CHAP.2 NOTICE

THANK YOU FOR BUYING OUR

PRODUCT. CHAP.2 IS THE NOTICE

TO BE READ.

61 63 65
62 64

6a
6b
6c
6d
6

5

EP 0 361 820 A2

# F I G . 3 (a)

# FIG.3 (b)

```
        ( START )
            │
            ▼
```

**S51**

SETTING THE TABLE OF CONTENTS POINTER AT THE
SENTENCE MANAGEMENT ELEMENT OF THE HEAD
OF THE TABLE OF CONTENTS ITEMS

**S52**

SETTING THE SENTENCE POINTER AT THE SENTENCE
MANAGEMENT ELEMENT INDICATED BY THE
CONTENTS SENTENCE POINTER IN THE SENTENCE
MANAGEMENT ELEMENT BEING INDICATED BY THE
TABLE OF CONTENTS POINTER

**S53** — IS THE REFERENCE SENTENCE POINTER IN THE SENTENCE MANAGEMENT ELEMENT INDICATED BY THE SENTENCE POINTER POINTING NIL ?

YES → (A)

NO

**S54** — IS THE REFERENCE POINTER POINTING A PLURALITY OF POINTS ?

NO → (D)

YES

**S60** — REPLACING THE HEADING NUMBER OF THE REFERENCE POINTER IN THE SENTENCE MANAGEMENT ELEMENT POINTED BY THE SENTENCE POINTER WITH THE HEADING NUMBER CORRESPONDING IN THE WORKING MEMORY

**S55** — REPLACING SERIALLY THE HEADING NUMBERS OF THE REFERENCE POINTER IN THE SENTENCE MANAGEMENT ELEMENT POINTED BY THE SENTENCE POINTER WITH THE HEADING NUMBERS CORRESPONDING IN THE WORKING MEMORY

(E)   (C)   (B)

# F I G . 3 (c)

SETTING THE SENTENCE POINTER AT THE SENTENCE MANAGEMENT ELEMENT INDICATED BY THE NEXT SENTENCE POINTER IN THE CURRENT SENTENCE MANAGEMENT ELEMENT — S56

IS THE SENTENCE POINTER POINTING NIL ? — S57

NO / YES

SETTING THE TABLE OF CONTENTS POINTER AT THE SENTENCE MANAGEMENT ELEMENT INDICATED BY THE NEXT SENTENCE POINTER IN THE CURRENT SENTENCE MANAGEMENT ELEMENT — S58

IS THE TABLE OF CONTENTS POINTER POINTING NIL ? — S59

NO / YES

END

EP 0 361 820 A2

# FIG.4

EP 0 361 820 A2

# F I G . 5

2. NOTICE

2. 1. SPECIAL NOTICE

2. 2. OTHER NOTICE

1. INTRODUCTION

THANK YOU FOR BUYING OUR

PRODUCT. 2. IS THE NOTICE TO BE

READ.

5

61 63 65
62 64

6a
6b
6c
6d
6e
6f

6

EP 0 361 820 A2

# FIG.6

1. NOTICE
1. 1. SPECIAL NOTICE
1. 2. OTHER NOTICE
2. INTRODUCTION
THANK YOU FOR BUYING OUR
PRODUCT. 1. IS THE NOTICE TO BE
READ.